# EUROPEAN PATENT SPECIFICATION

(11) **EP 4 286 151 B1**
(45) Date of publication and mention of the grant of the patent: **16.04.2025**
(21) Application number: 22177045.6
(22) Date of filing: 02.06.2022
(51) Int. Cl.: B32B 3/14, B32B 3/18, B32B 5/02, B32B 5/12, B32B 7/03, B32B 7/12, B32B 15/092, B32B 15/14

(54) **CURVED WALL COMPRISING AN ALTERNATION OF METAL AND COMPOSITE LAYERS, AND METHOD TO PRODUCE IT**
GEKRÜMMTE WAND MIT ABWECHSELNDEN METALL- UND VERBUNDSCHICHTEN UND VERFAHREN ZU IHRER HERSTELLUNG
PAROI INCURVÉE COMPRENANT UNE ALTERNANCE DE COUCHES MÉTALLIQUES ET COMPOSITES ET SON PROCÉDÉ DE PRODUCTION

(43) Date of publication of application: 06.12.2023
(73) Proprietor: Coexpair Dynamics, 5020 Namur (BE)
(72) Inventor: BERTIN, André, Vedrin (BE)
(74) Representative: Gevers Patents

(56) References cited:
- WO-A1-92/04184
- WO-A2-2012/007891
- US-A- 6 114 050

## Description

### Field of the invention

The present invention relates to a curved wall comprising composite material, and to items comprising such a curved wall. The invention also relates to a method to produced such a curved wall.

### Background of the invention

It is known to use composite materials for curved walls in various applications. However, known walls of composite materials may not be hermetic, especially for liquids or gases.

US6114050A discloses a composite aircraft fuselage section comprising a symmetrical hybrid laminate layup, the layup comprising laminated together:(a) a first layer 10 of metal foil comprising an outer surface of the fuselage section; (b) a first hoop ply 13 comprising commonly aligned carbon fibers embedded in a polymeric matrix; c) a second layer 10 of metal foil; d) a second a hoop ply 13 comprising commonly aligned carbon fibers embedded in a polymeric matrix. The metal foil comprise a titanium alloy. The metal foil has thickness of 70-250 µm (0.003 to 0.01 inches). The first and second layers of metal foil comprise butt-joined foils.

### Summary of the invention

An object of the invention is to provide a curved wall having an especially high tightness.

According to this first aspect, the invention provides a curved wall comprising, in this order:
- a first composite layer,
- a first metal layer, and
- a second composite layer;

wherein the first and second composite layers comprise carbon fibers;
wherein the first metal layer comprises metal strips of titanium-based material;
wherein the metal strips have a thickness between 1 and 500 µm and a width between 2 and 200 mm;
wherein the metal strips (30) of the first metal layer cover at least 80% of the surface of the first metal layer.

The presence of a metal layer between the composite layers creates a barrier for molecules, which increases the tightness of the wall. The use of strips for the metal layer, narrower than 200 mm, helps for following the curved shape: a foil of higher width may create folds when following the curve. The low thickness of the metal strips provides an especially light wall, which is interesting for aero-spatial applications. Because of its ductility, the titanium-based material makes the rupture of the stress introduction point more progressive in case of an overload on the curved-wall. The combination of the carbon fibers and the titanium-based material is especially interesting because there is no galvanic corrosion between these materials, and their coefficients of thermal expansion are close. This is especially interesting for cryogenic applications where micro cracks may appear, impeding tightness.

In the frame of the present document, a "titanium-based material" is made of titanium and/or an alloy comprising at least 50% of titanium in atomic percent, preferably at least 60%. Examples are Ti-6Al-4V, Ti-15V-3Cr-3Al-3Sn or Ti-6Al-7Nb.

The external surface of the wall may be a metal layer or a composite layer. The internal surface of the wall may be a metal layer or a composite layer.

The thickness of the first and second composite layers is preferably between 50 and 200 µm.

Preferably, the metal strips of any of the layer have the same width. The width of the metal strips may change, or not, between metal layers.

The curved wall preferably comprises a third metal layer and a third composite layer located between the second and the third metal layers.

The first metal layer is preferably in contact with the first composite layer and the second composite layer. The second metal layer is preferably in contact with the second composite layer, and possibly also with a third composite layer.

If the radius of curvature of the internal surface of the curved wall is below 1 meter, the width of the metal strips is preferably below 100 mm.

In an embodiment of the invention, the curved wall has at least one region where it is non-developable. In a non-developable region, a metal foil cannot follow the shape of the wall. Metal strips are therefore especially interesting. A non-developable region of the wall is a region where the Gauss curvature is different than zero.

In an embodiment of the invention, the curved wall comprises a second metal layer such that the second composite layer is between the first metal layer et and the second metal layer, the second metal layer comprising metal strips of titanium-based material having a thickness between 1 and 500 µm and a width between 2 and 200 mm, and covering at least 80% of the surface of the second metal layer.

In an embodiment of the invention, at least some of the metal strips of the first metal layer are parallel to a first direction and at least some of the metal strips of the second metal layer are parallel to a second direction different from the first direction. Having metal strips in different directions improves the mechanical properties and the tightness of the wall. At least some of the metal strips of the third metal layer are preferably in a direction than is different from the first direction and from the second direction. The directions of the metal strips is preferably such that there is an angle between 10° and 170° between two successive metal layers.

In an embodiment of the invention, the carbon fibers of the second composite layer are included in carbon-based strips. The width of the carbon-based strips is preferably between 2 and 500 mm, more preferably between 2 and 100 mm.

In the frame of the present document, a "carbon-based strip" is a strip comprising carbon fibers. It may also comprise a resin, preferably an epoxy.

In an embodiment of the invention, at least some of the carbon-based strips of the second composite layer are parallel to a third direction.

The third direction is different from the first direction and from the second direction. Therefore, the strips are in different directions in three layers, which improves the mechanical properties of the curved wall. The directions of the carbon-based strips is preferably such that there is an angle between 10° and 170° between two successive composite layers.

The directions of the metal strips and the carbon-based strips is preferably such that there is an angle between 10° and 170° between two adjacent layers, one of the adjacent layers being a metal layer and the other being a composite layer.

It is possible that the second composite layer comprise several composite sub-layers with carbon-based strips in different directions.

In an embodiment of the invention, the carbon-based strips have a width that is at most ten times the width of the metal strips of the first metal layer, and/or the width of the metal strips of the first metal layer is at most ten times the width of the carbon-based strips. This makes easier the production of the wall.

In an embodiment of the invention, the distance between two successive metal strips of the first metal layer is lower than 5 mm, preferably lower than 1 mm. Two successive metal strips may partially overlay. They are preferably placed next to each other with a distance as small as possible. However, the invention works even with a distance that is not extremely small, of the order of a few millimeters. It may also happen that the distance between two successive metal strips change because of the curvature of the wall.

In an embodiment of the invention, the curved wall comprises, at an interface between one of the composite layers and the first metal layer, a bonding agent comprising a complex of an organometallic and an organosilane. The bonding agent may be any material improving the adhesion between the composite layer and the metal layer. It may be in a layer between the composite layer and the metal layer, and/or included in the composite layer.

An object of the invention is a fuel tank for liquid and/or gaseous fuel comprising such a curved wall. The fuel tank is preferably a cryogenic fuel tank suitable for containing fuel at temperatures below 150°C. The fuel may be gaseous and/or liquid hydrogen. The fuel tank has preferably a non-developable curved wall, for example a spherical wall. The curved wall according to the invention may be included at least in the non-developable parts of the fuel tank wall. The metal layer, or the plurality of metal layers, is preferably closer to the internal surface of the wall than the external surface of the wall.

An object of the invention is an aircraft nose comprising such a curved wall. The curved wall according to the invention provides an especially high resistance to erosion. Moreover, the metal layers may be used as heating resistances to heat the aircraft nose. Many other applications of the curved wall are possible.

An object of the invention is a method for producing a curved wall comprising the successive steps of :
- forming a first composite layer,
- forming a first metal layer, and
- forming a second composite layer;

wherein the first and second composite layers comprise carbon fibers;
wherein the step of forming the first metal layers is realized with an automated tool and comprises applying metal strips of titanium-based material on the first composite layer, in such a way that a mechanical tension is created between the part of the metal strips already placed on the first composite layer and the part of the metal strips to be placed on the first composite layer,
wherein the metal strips have a thickness between 1 and 500 µm and a width between 2 and 200 mm;
wherein the metal strips of the first metal layer cover at least 80% of the surface of the first metal layer, and wherein the metal strips of the second metal layer are parallel and cover at least 80% of the surface of the second metal layer.

The shift between two successive parallel metal strips is automated.

Filament winding and/or automated fiber placement may be used to produce a curved wall according to the invention.

The tension is preferably applied by a tension application device.

The carbon-based strips may also be applied on the underlying metal layer by the automated tool.

The shape of the curved wall is programmed in the automated tool in such a way that the positioning of the metal strips is automated.

The step of forming the second metal layers preferably comprises applying metal strips of titanium-based material on the second composite layer, in such a way that a mechanical tension is created between the part of the metal strips already placed on the second composite layer and the part of the metal strips to be placed on the second composite layer. The second metal layer is preferably formed with an automated tool, which is preferably the same as the one used for the first metal layer.

In an embodiment of the invention, after being placed on the first composite layer, the metal strips of the first metal layer are pressed against the first composite layer. It improves the positioning and the adhesion. The pressure is preferably applied by a compression device, for example a roller. The compression device moves. Its motion is automated.

In an embodiment of the invention, the automated tool comprises a mobile part, which comprises an application guide positioning the part of the metal strips to be applied with respect to the first composite layer or the second composite layer. The mobile application guide improves the positioning. Its motion is automated.

In an embodiment of the invention, wherein the part of the metal strips to be applied is heated or cooled before being placed on the first composite layer or the second composite layer. The temperature is preferably increased or decreased by a heating and/or cooling device.

### Brief description of the figures

For a better understanding of the present invention, reference will now be made, by way of example, to the accompanying drawings in which:
- Figure 1 is a cross-section of a curved wall,
- Figure 2 illustrates a possible arrangement of metal strips,
- Figure 3 illustrates a possible relative location of successive composite and metal layers,
- Figure 4 is a cross-section of a fuel tank,
- Figure 5 is a cross-section of an aircraft nose, and
- Figure 6 illustrates a placement of a metallic strip with an automated tool.

### Description of the invention

The present invention will be described with respect to particular embodiments and with reference to certain drawings but the invention is not limited thereto. The described functions are not limited by the described structures. The drawings described are only schematic and are non-limiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

On the figures, identical or analogous elements may be referred by a same number.

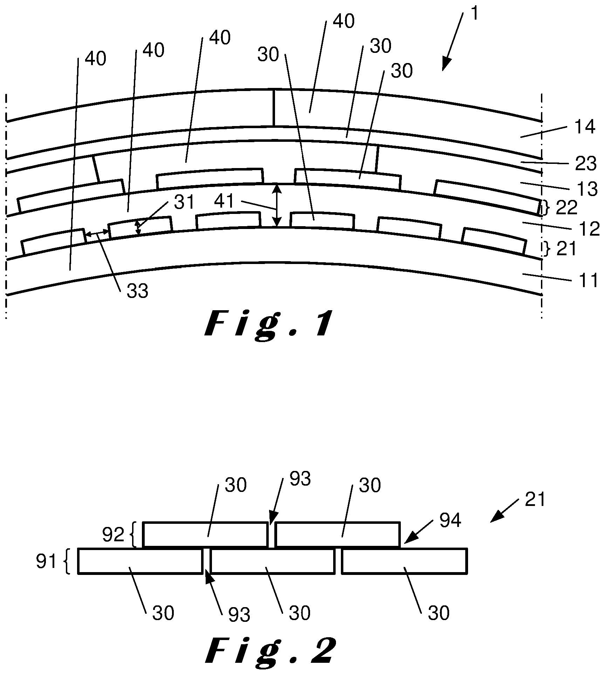

Figure 1 illustrates a curved wall 1 in an embodiment of the invention. The curved wall 1 comprises a first composite layer 11, a first metal layer 21, a second composite layer 12, and, preferably, a second metal layer 22. It may also comprise a third composite layer 13, a third metal layer 23, and a fourth composite layer 14. The curved wall 1 preferably comprise an alternation of metal and composite layers on a thickness higher than 1 mm and lower than 10 cm, more preferably lower than 2 cm. It may for example include at least ten composite layers interposed between at least eleven metal layers.

The composite layers 11, 12 comprise carbon fibers and, preferably a resin. The composite layers 11, 12 may comprise carbon-based strips 40. The composite layers 11, 12 preferably have a thickness 41 below 200 µm. The composite layers 11, 12 are preferably thicker than the metal layers 21, 22.

Since the composite layers 11, 12 are made of an elastic material, the metal layers 21, 22 may be integrated within one or two of the adjacent composite layers 11, 12.

The metal layers 21, 22 comprise metal strips 30 of titanium-based material. The metal strips 30 have a thickness 31 between 1 and 500 µm, preferably between 1 and 100 µm. Within a metal layer 21, 22, they are preferably parallel to each other. They may be separated by a lateral distance 33 below 5 mm, preferably below 1 mm, in such a way that at least 80% of the surface of any the metal layers 21, 22 is made of metal strips 30. The metal strips 30 may partially overlay. In such a case, there is preferably an adhesive on the interface between the two metal strips 30.

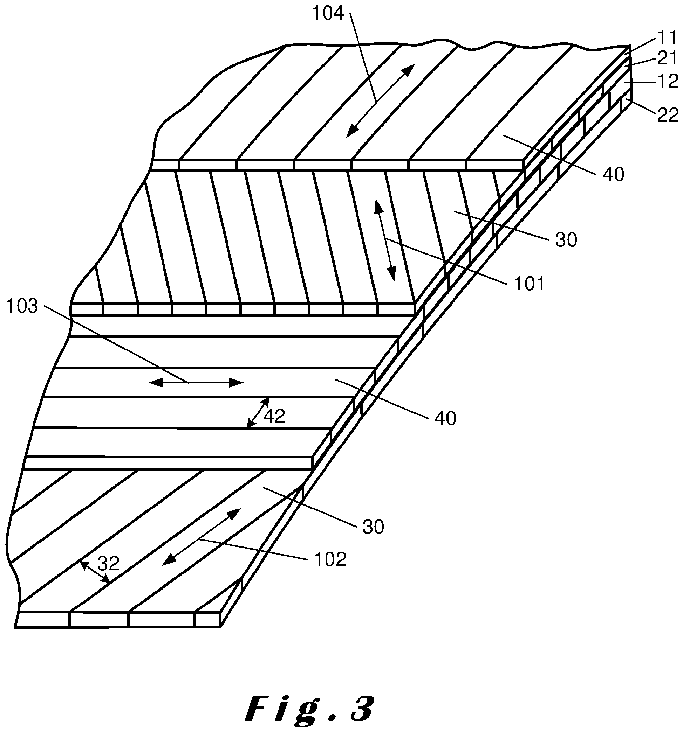

Within a metal layer 21, 22, the metal strips 30 preferably have identical width 32 (figure 3) and/or identical thickness 31. Preferably, the width 32 (figure 3) of the metal strips 30 of the first 21 and second 22 metal layers is identical.

The apparent difference in width between the metal strips 30 (or the carbon-based strips) in Figure 2 comes from the difference in direction of the strips between the layers, as illustrated on Figure 3, which may create cross-sections of different sizes even for strips of the same width.

A bonding agent may be present between, one the one side, the metal of the metal layers 21, 22 and, on the other side, the resin and/or the carbon of the composite layers 11, 12. It is applied on the metal and/or the composite before there are joined. In an embodiment of the invention, an organometallic and an organosilane are mixed to create a complex which forms the bonding agent. The bonding agent may be a sol-gel.

Figure 2 illustrates the first metal layer 21 in an arrangement wherein it comprises two sub-layers 91, 92. The metal strips 30 of the sub-layers 91, 92 may be aligned in different directions. There is preferably an adhesive where the two metal strips 30 are in contact with each other, for example at the interface 94 between the sub-layers 91, 92. The space lateral space 93 between two metal strips 30 of any of the sub-layers 91, 92 is preferably filled with resin and/or with the adhesive.

Figure 3 shows a superposition of composite 11, 12 and metal 21, 22 layers. The metal strips 30 of the first layer 21 are parallel to a first direction 101. The metal strips 30 of the second layer 22 are parallel to a second direction 102, which is tilted with respect to the first direction 101, preferably by an angle of at least 10°. The first direction 101 and the second direction 102 make preferably an angle between 10° and 170°. The carbon-based strips 40 of the second composite layer 12 are parallel to a third direction 103, which is tilted with respect to the first direction 101 and to the second direction 102, preferably by angles of at least 10°. The carbon-based strips 40 of the first composite layer 11 are parallel to a fourth direction 104, which is tilted with respect to the first direction 101 and to the third direction 103, preferably by angles of at least 10°.

Preferably, the width 32 of the metal strips 30 is not more than ten times larger than the width 42 of the carbon-based strips 40, and/or the width 42 of the carbon-based strips 40 is not more than ten times larger than the width 32 of the metal strips 30. This preferably applies even if the metal strips 30 of different metal layers 21, 22 have different widths, and/or the carbon-based strips 40 of different composite layers 11, 12 have different widths.

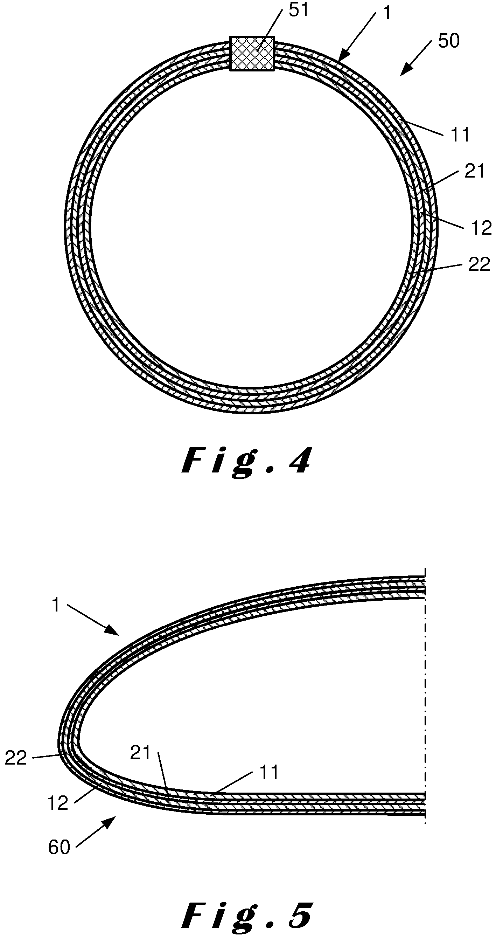

Figures 4 and 5 illustrates two examples of curved walls 1 having at least one region where the wall is not developable.

Figure 4 shows a fuel tank 50. It comprises an opening 51. The internal surface of the fuel tank 50 may be a metal layer of the curved wall 1, as illustrated, or a composite layer of the curved wall 1. It may also be another layer coated on a curved wall 1, even if this embodiment is less preferred.

Figure 5 shows a nose 60 of an aircraft. The external surface is preferably a metal layer.

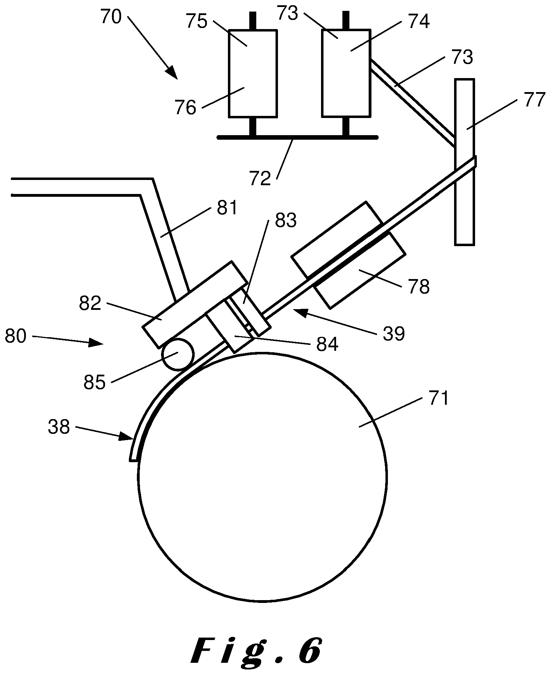

Figure 6 schematized an automated tool 70 placing the first metal layer 21 on the first composite layer 11 (not shown) already shaped as a curved wall under construction 71.

The automated tool 70 preferably comprises a support 72 for a spool 76 of a carbon-based ribbon 75 that will be cut in carbon-based strips 40. The support 72 also supports a spool 74 of metal ribbon 73 that will be cut in metal strips 30. The ribbons 73, 75 may be cut before being applied on the curved wall under construction 71 or after at least one part of them has been applied on the curved wall under construction 71. The automated tool 70 preferably comprises a guiding system 77 guiding the ribbon 73 being placed between the spool 74 and an application guide 84. The ribbon 73 may be heated or cooled by a heating and/or cooling device 78.

The resin is preferably present in the carbon-based ribbon 75, and some additional resin may be added later in the production process.

The bonding agent may be present on at least one of the ribbons 73, 75 on the spool 74, 76 or may be placed on at least one of the ribbons 73, 75 by the automated tool 70.

The automated tool 70 may comprise a mobile part 80, for example comprising an arm 81 and a mobile head 82. The automated tool 70 comprises a tension application device 83 which applies a tension, preferably by pulling, on the part 39 of the metal strips 30 to be placed on the first composite layer 11, to keep it taut with respect to the part 38 of the metal strips 30 already placed on the first composite layer 11 and adhering to the curved wall under construction 71. The automated tool 70 may comprise a compression device 85 pressing on the part 38 of the metal strips 30 placed on the first composite layer 11.

After application of all the layers 11, 12, 21, 22 etc, the curved wall 1 is preferably heated to cure the resin.

In other words, the invention relates to a curved wall 1 comprising an alternation of metal 21and composite 11, 12 layers, and to a method to produce it. The metal 21layer is made of aligned metal strips 30 and can thus conform to any shape of the curved wall 1.

## Claims

1. Curved wall (1) comprising, in this order:
• a first composite layer (11),
• a first metal layer (21), and
• a second composite layer (12);
wherein the first (11) and second (12) composite layers comprise carbon fibers;
wherein the first (21) metal layer comprises metal strips (30) of titanium-based material;
wherein the metal strips (30) have a thickness (31) between 1 and 500 µm and a width (32) between 2 and 200 mm;
wherein the metal strips (30) of the first metal layer (21) cover at least 80% of the surface of the first metal layer (21).

2. Curved wall (1) according to the preceding claim, wherein the curved wall (1) has at least one region where it is non-developable.

3. Curved wall (1) according to any of the preceding claims, comprising a second metal layer (22) such that the second composite layer (12) is between the first metal layer (21) and the second metal layer (22). the second metal layer (22) comprising metal strips (30) of titanium-based material having a thickness (31) between 1 and 500 µm and a width (32) between 2 and 200 mm, and covering at least 80% of the surface of the second metal layer (22).

4. Curved wall (1) according to the preceding claim, wherein at least some of the metal strips (30) of the first metal layer (21) are parallel to a first direction (101) and at least some of the metal strips (30) of the second metal layer (22) are parallel to a second direction (102) different from the first direction (101).

5. Curved wall (1) according to any of the preceding claims, wherein the carbon fibers of the second composite layer (12) are included in carbon-based strips (40).

6. Curved wall (1) according to claim 5, wherein at least some of the carbon-based strips (40) of the second composite layer (12) are parallel to a third direction (103).

7. Curved wall (1) according to claim 5 or 6, wherein the carbon-based strips (40) have a width (42) that is at most ten times the width (32) of the metal strips (30) of the first metal layer (21), and/or the width (32) of the metal strips (30) of the first metal layer (21) is at most ten times the width (42) of the carbon-based strips (40).

8. Curved wall (1) according to any of the preceding claims, wherein the distance (33) between two successive metal strips (30) of the first metal layer (21) is lower than 5 mm, preferably lower than 1 mm.

9. Curved wall (1) according to any of the preceding claims, comprising, at an interface between one of the composite layers (11, 12) and the first metal layer (21) a bonding agent comprising a complex of an organometallic and an organosilane.

10. Fuel tank (50) for liquid and/or gaseous fuel comprising a curved wall (1) according to any of the preceding claims.

11. Aircraft nose (60) comprising a curved wall (1) according to any of claims 1 to 9.

12. Method for producing a curved wall (1) comprising the successive steps of :
• forming (111) a first composite layer (11),
• forming (121) a first metal layer (21), and
• forming (112) a second composite layer (12);
wherein the first (11) and second (12) composite layers comprise carbon fibers;
wherein the step of forming (111) the first metal layers (21) is realized with an automated tool (70) and comprises applying metal strips (30) of titanium-based material on the first composite layer (11), in such a way that a mechanical tension is created between the part (38) of the metal strips (30) already placed on the first composite layer (11) and the part (39) of the metal strips (30) to be placed on the first composite layer (11),
wherein the metal strips (30) have a thickness (31) between 1 and 500 µm and a width (32) between 2 and 200 mm;
wherein the metal strips (30) of the first metal layer (21) cover at least 80% of the surface of the first metal layer (21), and
wherein the metal strips (30) of a second metal layer (22) are parallel and cover at least 80% of the surface of the second metal layer (22).

13. Method according to claim 12, wherein, after being placed on the first composite layer (11), the metal strips (30) of the first metal layer (21) are pressed against the first composite layer (11).

14. Method according to claim 12 or 13, wherein the automated tool (70) comprises a mobile part (80), which comprises an application guide (84) positioning the part (39) of the metal strips (30) to be applied with respect to the first composite layer (11) or the second composite layer (12).

15. Method according to any of claims 12 to 14, wherein the part (39) of the metal strips (30) to be applied is heated or cooled before being placed on the first composite layer (11) or the second composite layer (12).

## Patentansprüche

1. Gekrümmte Wand (1), umfassend, in dieser Reihenfolge:
- eine erste Verbundschicht (11),
- eine erste Metallschicht (21), und
- eine zweite Verbundschicht (12);
wobei die erste (11) und die zweite (12) Verbundschicht Kohlenstofffasern umfassen;
wobei die erste (21) Metallschicht Metallstreifen (30) aus Material auf Titanbasis umfasst;
wobei die Metallstreifen (30) eine Dicke (31) zwischen 1 und 500 µm und eine Breite (32) zwischen 2 und 200 mm aufweisen;
wobei die Metallstreifen (30) der ersten Metallschicht (21) mindestens 80 % der Oberfläche der ersten Metallschicht (21) bedecken.

2. Gekrümmte Wand (1) nach dem vorstehenden Anspruch, wobei die gekrümmte Wand (1) mindestens einen Bereich aufweist, an dem sie nicht entwickelbar ist.

3. Gekrümmte Wand (1) nach einem der vorstehenden Ansprüche, die eine zweite Metallschicht (22) derart umfasst, dass sich die zweite Verbundschicht (12) zwischen der ersten Metallschicht (21) und der zweiten Metallschicht (22) befindet, wobei die zweite Metallschicht (22) Metallstreifen (30) aus Material auf Titanbasis umfasst, die eine Dicke (31) zwischen 1 und 500 µm und eine Breite (32) zwischen 2 und 200 mm aufweisen und mindestens 80 % der Oberfläche der zweiten Metallschicht (22) bedecken.

4. Gekrümmte Wand (1) nach dem vorstehenden Anspruch, wobei mindestens einige der Metallstreifen (30) der ersten Metallschicht (21) zu einer ersten Richtung (101) parallel verlaufen und mindestens einige der Metallstreifen (30) der zweiten Metallschicht (22) zu einer zweiten Richtung (102), die sich von der ersten Richtung (101) unterscheidet, parallel verlaufen.

5. Gekrümmte Wand (1) nach einem der vorstehenden Ansprüche, wobei die Kohlenstofffasern der zweiten Verbundschicht (12) in Streifen auf Kohlenstoffbasis (40) beinhaltet sind.

6. Gekrümmte Wand (1) nach Anspruch 5, wobei mindestens einige der Streifen auf Kohlenstoffbasis (40) der zweiten Verbundschicht (12) zu einer dritten Richtung (103) parallel verlaufen.

7. Gekrümmte Wand (1) nach Anspruch 5 oder 6, wobei die Streifen auf Kohlenstoffbasis (40) eine Breite (42) aufweisen, die höchstens das Zehnfache der Breite (32) der Metallstreifen (30) der ersten Metallschicht (21) beträgt, und/oder die Breite (32) der Metallstreifen (30) der ersten Metallschicht (21) höchstens das Zehnfache der Breite (42) der Streifen auf Kohlenstoffbasis (40) beträgt.

8. Gekrümmte Wand (1) nach einem der vorstehenden Ansprüche, wobei der Abstand (33) zwischen zwei aufeinanderfolgenden Metallstreifen (30) der ersten Metallschicht (21) kleiner als 5 mm, vorzugsweise kleiner als 1 mm, ist.

9. Gekrümmte Wand (1) nach einem der vorstehenden Ansprüche, die an einer Grenzfläche zwischen einer der Verbundschichten (11, 12) und der ersten Metallschicht (21) ein Bindemittel umfasst, das einen Komplex aus einem Organometall und einem Organosilan umfasst.

10. Kraftstofftank (50) für flüssigen und/oder gasförmigen Kraftstoff, der eine gekrümmte Wand (1) nach einem der vorstehenden Ansprüche umfasst.

11. Flugzeugnase (60), die eine gekrümmte Wand (1) nach einem der Ansprüche 1 bis 9 umfasst.

12. Verfahren zum Erzeugen einer gekrümmten Wand (1), das die aufeinanderfolgenden Schritte umfasst:
- Bilden (111) einer ersten Verbundschicht (11),
- Bilden (121) einer ersten Metallschicht (21), und
- Bilden (112) einer zweiten Verbundschicht (12);
wobei die erste (11) und die zweite (12) Verbundschicht Kohlenstofffasern umfassen;
wobei der Schritt des Bildens (111) der ersten Metallschichten (21) mit einem automatisierten Werkzeug (70) ausgeführt wird und das Aufbringen von Metallstreifen (30) aus Material auf Titanbasis auf die erste Verbundschicht (11) derart umfasst, dass zwischen dem Teil (38) der Metallstreifen (30), der bereits auf der ersten Verbundschicht (11) platziert ist, und dem Teil (39) der Metallstreifen (30), der auf der ersten Verbundschicht (11) platziert werden soll, eine mechanische Spannung erstellt wird, wobei die Metallstreifen (30) eine Dicke (31) zwischen 1 und 500 µm und eine Breite (32) zwischen 2 und 200 mm aufweisen;
wobei die Metallstreifen (30) der ersten Metallschicht (21) mindestens 80 % der Oberfläche der ersten Metallschicht (21) bedecken, und wobei die Metallstreifen (30) einer zweiten Metallschicht (22) parallel verlaufen und mindestens 80 % der Oberfläche der zweiten Metallschicht (22) bedecken.

13. Verfahren nach Anspruch 12, wobei die Metallstreifen (30) der ersten Metallschicht (21), nachdem sie auf der ersten Verbundschicht (11) platziert wurden, an die erste Verbundschicht (11) gepresst werden.

14. Verfahren nach Anspruch 12 oder 13, wobei das automatisierte Werkzeug (70) einen beweglichen Teil (80) umfasst, der eine Applikationsführung (84) umfasst, die den zu applizierenden Teil (39) der Metallstreifen (30) in Bezug auf die erste Verbundschicht (11) oder die zweite Verbundschicht (12) positioniert.

15. Verfahren nach einem der Ansprüche 12 bis 14, wobei der zu applizierende Teil (39) der Metallstreifen (30), bevor er auf der ersten Verbundschicht (11) oder der zweiten Verbundschicht (12) platziert wird, erhitzt oder abgekühlt wird.

## Revendications

1. Paroi courbe (1) comprenant, dans cet ordre :
• une première couche composite (11),
• une première couche métallique (21), et
• une deuxième couche composite (12);
dans laquelle la première (11) et la deuxième (12) couches composites sont constituées de fibres de carbone ;
dans laquelle la première (21) couche métallique comprend des bandes métalliques (30) en matériau à base de titane ;
dans laquelle les bandes métalliques (30) ont une épaisseur (31) comprise entre 1 et 500 µm et une largeur (32) comprise entre 2 et 200 mm ;
dans laquelle les bandes métalliques (30) de la première couche métallique (21) couvrent au moins 80 % de la surface de la première couche métallique (21).

2. Paroi courbe (1) selon la revendication précédente, dans laquelle la paroi courbe (1) comporte au moins une zone non-développable.

3. Paroi courbe (1) selon l'une quelconque des revendications précédentes, comprenant une seconde couche métallique (22) telle que la seconde couche composite (12) se trouve entre la première couche métallique (21) et la seconde couche métallique (22), la seconde couche métallique (22) comprenant des bandes métalliques (30) en matériau à base de titane ayant une épaisseur (31) comprise entre 1 et 500 µm et une largeur (32) comprise entre 2 et 200 mm, et couvrant au moins 80% de la surface de la seconde couche métallique (22).

4. Paroi courbe (1) selon la revendication précédente, dans laquelle au moins certaines des bandes métalliques (30) de la première couche métallique (21) sont parallèles à une première direction (101) et au moins certaines des bandes métalliques (30) de la deuxième couche métallique (22) sont parallèles à une deuxième direction (102) différente de la première direction (101).

5. Paroi courbe (1) selon l'une quelconque des revendications précédentes, dans laquelle les fibres de carbone de la seconde couche composite (12) sont incluses dans des bandes à base de carbone (40).

6. Paroi courbe (1) selon la revendication 5, dans laquelle au moins certaines des bandes à base de carbone (40) de la deuxième couche composite (12) sont parallèles à une troisième direction (103).

7. Paroi courbe (1) selon la revendication 5 ou 6, dans laquelle les bandes à base de carbone (40) ont une largeur (42) qui est au plus dix fois la largeur (32) des bandes métalliques (30) de la première couche métallique (21), et/ou la largeur (32) des bandes métalliques (30) de la première couche métallique (21) est au plus dix fois la largeur (42) des bandes à base de carbone (40).

8. Paroi courbe (1) selon l'une quelconque des revendications précédentes, dans laquelle la distance (33) entre deux bandes métalliques successives (30) de la première couche métallique (21) est inférieure à 5 mm, de préférence inférieure à 1 mm.

9. Paroi courbe (1) selon l'une quelconque des revendications précédentes, comprenant, à une interface entre l'une des couches composites (11, 12) et la première couche métallique (21), un agent de liaison comprenant un complexe d'un organométallique et d'un organosilane.

10. Réservoir (50) de carburant liquide et/ou gazeux comprenant une paroi courbe (1) selon l'une quelconque des revendications précédentes.

11. Nez d'avion (60) comprenant une paroi courbe (1) selon l'une quelconque des revendications 1 à 9.

12. Procédé de réalisation d'une paroi courbe (1) comprenant les étapes successives de :
• former (111) une première couche composite (11),
• former (121) une première couche métallique (21), et
• former (112) une deuxième couche composite (12) ;
dans lequel la première (11) et la deuxième (12) couches composites sont constituées de fibres de carbone ;
dans lequel l'étape de formation (111) des premières couches métalliques (21) est réalisée à l'aide d'un outil automatisé (70) et comprend l'application de bandes métalliques (30) en matériau à base de titane sur la première couche composite (11), de manière à créer une tension mécanique entre la partie (38) des bandes métalliques (30) déjà placées sur la première couche composite (11) et la partie (39) des bandes métalliques (30) à placer sur la première couche composite (11), dans laquelle les bandes métalliques (30) ont une épaisseur (31) comprise entre 1 et 500 µm et une largeur (32) comprise entre 2 et 200 mm ;
dans laquelle les bandes métalliques (30) de la première couche métallique (21) couvrent au moins 80 % de la surface de la première couche métallique (21), et dans laquelle les bandes métalliques (30) d'une deuxième couche métallique (22) sont parallèles et couvrent au moins 80 % de la surface de la deuxième couche métallique (22).

13. Procédé selon la revendication 12, dans lequel, après avoir été placées sur la première couche composite (11), les bandes métalliques (30) de la première couche métallique (21) sont pressées contre la première couche composite (11).

14. Procédé selon la revendication 12 ou 13, dans lequel l'outil automatisé (70) comprend une partie mobile (80), qui comprend un guide d'application (84) positionnant la partie (39) des bandes métalliques (30) à appliquer par rapport à la première couche composite (11) ou à la seconde couche composite (12).

15. Procédé selon l'une quelconque des revendications 12 à 14, dans lequel la partie (39) des bandes métalliques (30) à appliquer est chauffée ou refroidie avant d'être placée sur la première couche composite (11) ou la seconde couche composite (12).
